# EUROPÄISCHE PATENTSCHRIFT

(11) **EP 2 341 032 B1**
(45) Veröffentlichungstag und Bekanntmachung des Hinweises auf die Patenterteilung: **20.03.2019**
(21) Anmeldenummer: 10015584.5
(22) Anmeldetag: 14.12.2010
(51) Int. Cl.: C02F 1/469, C02F 1/46, C02F 103/02, C02F 103/04, C02F 1/00, C02F 1/42, C02F 1/66, C02F 5/08

(54) **Vorrichtung zur Aufbereitung von Wasser für die Speisung eines Durchflusskondensators**
Device for preparing water for supplying to a flow-through capacitor
Dispositif destiné à la préparation d'eau pour l'alimentation d'un condensateur à écoulement traversant

(30) Priorität: 15.12.2009 DE 102009058185
(43) Veröffentlichungstag der Anmeldung: 06.07.2011
(73) Patentinhaber: Schnider, Kurt, 90443 Widnau (CH)
(72) Erfinder:
(74) Vertreter: Otten, Roth, Dobler & Partner mbB Patentanwälte

(56) Entgegenhaltungen:
- EP-A1- 1 834 927
- WO-A1-2006/079417
- JP-A- 2002 210 467
- JP-A- 2002 273 438
- US-A1- 2005 103 634
- DATABASE WPI Week 200548 Thomson Scientific, London, GB; AN 2005-467531 XP002670485, -& CN 1 587 114 A (UNIV SHANGHAI) 2. März 2005 (2005-03-02)

## Beschreibung

Die vorliegende Erfindung betrifft eine Vorrichtung zur Aufbereitung von Wasser nach Anspruch 1.

### Stand der Technik

Konditionierung von Wasser für die Speisung von Durchflusskondensatoren ist beschrieben, zum Beispiel in "The Seventh National Technology Transfer Conference and Exposition in Anaheim", CA, on October 29-31, 1996, in US 5200068, 5360540, 5192432, 5196115, 5 415 768, 5547581, 5779891 für Andelman sowie bereits 1970 in US 3 658 674 für Benak.

Das Dokument von Allen M. Johnson et al. "The Electrosorb Process for Desalting Water", März 1970, The Office of Saline Water Research and Development Progress Report Nr. 516, U.S. Department of Interior PB 200 056, und die US 5 425 858 für Joseph Farmer beschreiben Durchflusskondensatoren oder Durchfluss-Entsalzungssysteme.

Durchflusskondensatoren nach dem Stand der Technik wirken durch Konzentration von im Speisewasserstrom enthaltenen Inhaltsstoffen, insbesondere von gelösten geladenen Inhaltsstoffen, wie z. B. Ionen, zu einem konzentrierten Abwasserstrom. Dies hat zwei wesentliche Konsequenzen:
1. die Methode basiert auf der Ausschleusung eines konzentrierten Abwasserstroms und
2. die Technologie hat die Tendenz, dass konzentrierte Inhaltsstoffe Ablagerungen verursachen und das System verschmutzen. Insbesondere die in vielen Speisewässern vorhandene Wasserhärte, bestehend aus Calciumsulfat und/oder Calciumcarbonat, aber auch andere gelöste Stoffe befinden sich Nahe oder über ihrem Sättigungsbereich und neigen nach Aufkonzentrierung zur Bildung von Verkrustungen und zur Belegung der Reinigungsvorrichtung.

Die Verschmutzung ist ein wohlbekanntes Problem bei Abwasservorrichtungen wie etwa bei der Umkehrosmose und der Elektrodialyse, die mit dem Durchflusskondensator die Tendenz gemeinsam haben, Gelöstes über den Sättigungspunkt hinaus zu konzentrieren.

Zur Vermeidung von Ablagerungen und von Verstopfungen bei den Reinigungsvorrichtungen durch Trübstoffe, Kolloide und Teilchen wurden zahlreiche Verbesserungen an den Elektroden und am Zellaufbau der Reinigungsvorrichtungen vorgenommen und beschrieben, z. B. in EP 0861114 B1 oder US 5425858. Insbesondere beschrieben wurde die Verschmutzung von Kondensatoren bei Speisung der Vorrichtung mit hartem Wasser und dass ein Durchflusskondensator mit einer Vielzahl von allgemein parallelen offenen Durchflusswegen Vorteile in Bezug auf die Schmutzbeständigkeit bietet und gleichzeitig eine kompakte und leicht herzustellende. Konstruktion hat.

Dabei wurden auch kurze und offene Durchflusswege sowie spezielle Zell- und Kanalgeometrien und Elektrodenkombinationen beschrieben, um das gesättigte oder übersättigte Konzentrat aus dem Kondensator auszuspülen, bevor der kinetische Prozess der Kristallisation zur Bildung von Präzipitaten führt und Verschmutzungen oder Kristalle verursacht. Wenn sich einmal Feststoffe oder Ablagerungen im Inneren eines Kondensators gebildet haben, ist es schwierig oder sogar unmöglich diese ohne eine aufwändige Reinigung des Kondensators, ggf. sogar mit Chemikalien, wie z. B. Säuren, von den Verschmutzungen wieder zu befreien.

Aus dem Stand der Technik ist im Weiteren folgendes bekannt. Die XP-002670485/CN20041052643 offenbart einen Durchflusskondensator zur Aufbereitung von Meerwasser mit einer vorgeschalteten Vorbehandlungseinheit. Die US 2005/0103634 A1 offenbart einen Durchflusskondensator mit einer stromaufwärts vorgeschalteten Wasseraufbereitungseinheit. Die WO 2006/079417 A1 offenbart einen Durchflusskondensator mit einem vorgeschalteten pH-Modifizierer. Die JP 2002-210467 offenbart ebenfalls einen Durchlaufkondensator, dem zur Einflussaufnahme auf das ihm zugeführte, aufzubereitende Wasser ein Säurezugabemittel vorgeschaltet ist. Die JP 2002-273438 A offenbart mehrere in Reihe hintereinander geschaltete Durchflusskondensatoren zur Aufbereitung von Wasser, mit einer weiteren, nachgeschalteten, ein Ionentauschharz umfassenden Wasseraufbereitungseinheit. Und die EP 1 834 927 A1 offenbart eine Vorrichtung zur Wasseraufbereitung mit Verschnittvorrichtung.

### Aufgabe und Vorteile der Erfindung

Der vorliegenden Erfindung liegt die Aufgabe zugrunde, den Betrieb eines Durchflusskondensators entsprechend des einleitend dargelegten Standes der Technik so zu verbessern, dass vorzeitige Ablagerungen und Verstopfungen resultierend aus Inhaltsstoffen des Speisewassers in der Reinigungsvorrichtung und insbesondere im Inneren des Durchflusskondensators verhindert oder verzögert werden.

Die Lösung der Aufgabe erfolgt ausgehend vom Oberbegriff des Anspruchs 1 durch dessen kennzeichnende Merkmale. Die in den Unteransprüchen genannten Merkmale zeigen vorteilhafte Ausführungen und Weiterbildungen der Erfindung.
Demnach betrifft die vorliegende Erfindung eine Vorrichtung zur Aufbereitung von Speisewasser für die Speisung eines Durchflusskondensators. Sie zeichnet sich unter anderem dadurch aus, dass dem Durchflusskondensator eine Speisewasser-Vorbehandlungseinheit in Wasserzulaufrichtung vorgeschaltet ist.
Verbessert werden kann die Vorbehandlung durch eine kontinuierliche und/oder durch eine sporadische und ggf. an die Betriebszyklen der Reinigungsvorrichtung angepasste Zudosierung von Stoffen, die eine vorzeitige Ablagerung, Ausfällung und/oder Kristallisation von Inhaltsstoffen des Speisewassers in der Reinigungsvorrichtung und insbesondere innerhalb des Durchflusskondensators verhindern oder verzögern sollen.
Denkbar ist z. B. die Zudosierung von Antiscaling Substanzen, wie z. B. Polyphosphat, über eine dem Durchflusskondensator vorgeschaltete Vorbehandlungsvorrichtung, zur Resthärtestabilisierung.

Auch denkbar ist der Einsatz eines Enthärters auf Basis eines Kationenaustauschers, z. B. in Form eines Natrium- und/oder Kalium gebundenen Ionenaustauschers, der die Wasserhärte durch Austausch von Calcium- und Magnesium gegen z. B. Natrium oder Kalium in ein anderes Salz umwandelt, das eine höhere Löslichkeit und dadurch bei Aufkonzentration eine geringere Neigung zur Auskristallisation aufweist und/oder das sich nach Unterschreiten des Sättigungsgleichgewichtes wieder einfacher löst.
Auch denkbar ist die Verwendung eines Wasserstoff-Donators in Form von bestimmten Mineralstoffen oder organischen Säuren in einer Vorbehandlungsvorrichtung zur Absenkung des pH-Wertes und Verschiebung des Sättigungsgleichgewichtes.
Eine weitere denkbare Variante zur Ansäuerung des Speisewassers wäre über einen elektrischen Protonen-Donator.
Eine weitere Möglichkeit zur gezielten pH-Wert-Absenkung insbesondere in Kombination mit einer Reduzierung des Calciumcarbonat-Gehaltes im Speisewasser kann über eine Entkarbonisierungsstufe, z. B. in Form von wasserstoffgebundenen schwachsauren Kationenaustauschern erreicht werden oder über einen stark sauren Kationenaustauscher, überwiegend in Wasserstoffform.
Insbesondere der Einsatz von schwachsauren Kationenaustauschern ermöglicht eine direkt dem Calciumcarbonat- Gehalt des Speisewassers proportionale Abgabe von Wasserstoff- Ionen an das Speisewasser und eine davon direkt abhängige pH-Wert-Absenkung.
Der Kationenaustauscher kann allein oder in Kombination mit antiscaling- oder härtestabilisierungs- oder kristallisationshemmenden Substanzen und/oder in Kombination mit Partikelfiltermaterialien und/oder in Kombination mit anderen Vorbehandlungsmitteln zum Schutz der Durchflusskondensator-Kanäle in Form einer Austausch-Filterpatrone dem Durchflusskondensator vorgeschaltet werden.

In einer weiteren Ausführungsvariante könnte die Einsatzdauer der Durchflusskondensatorzelle mit der Kapazität der Vorbehandlungseinheit angepasst werden, so dass beide Stufen in einer Austauschkartusche integriert gemeinsam ausgetauscht werden können. Hierbei ist die Austauscheinheit als in einen leitungsgebundenen Anschlusskopf einsetzbare Aufbereitungskartsuche ausgebildet.

Als leitungsgebundener Anschlusskopf werden erfindungsgemäß alle Anschlusstücke verstanden, die an eine wasserführende Leitung, insbesondere an ein Leitungswasser-Versorgungssystem angeschlossen bzw. in dieses integriert werden können.
Hierbei ist eine kontinuierliche Vorbehandlung der gesamten in den Durchflusskondensator eingespeisten Wassermenge denkbar, als auch eine diskontinuierliche und ggf. den einzelnen Zyklen des Durchflusskondensators angepasste Einspeisung von vorbehandeltem Wasser.
Insbesondere auch eine im Abstand von mehreren Zyklen durchgeführte Einspeisung von vorbehandeltem Wasser oder eine ausschließlich dem Spülwasser zugeführte Menge an vorbehandeltem Wasser, wodurch die Vorbehandlungs-Patrone pro produzierter Wassereinheit weniger belastet und eine höhere Einsatzdauer aufweisen könnte.
Eine zur gezielten Speisung von Individuellen Betriebszyklen des Durchflusskondensators angepasste Einspeisung von vorbehandeltem Wasser könnte über eine steuerungstechnische Verknüpfung der Vorbehandlungseinrichtung mit den PC-Board bzw. mit der Programmierung des Durchflusskondensators erreicht werden.
Die Erfindung betrifft somit ein geeignetes Vorbehandlungsverfahren sowie eine Vorbehandlungsvorrichtung zur Konditionierung des Speisewassers mit dem Ziel der Vermeidung oder Reduzierung von Ablagerungen und Verstopfungen in der Reinigungsvorrichtung und insbesondere im Durchflusskondensator. Durch das Vorbehandlungsverfahren soll ein kontinuierlich alternierender Betrieb eines Durchflusskondensators während der Gesamteinsatzdauer der Kondensatorzelle ohne Unterbrechung der alternierenden Zyklen zur Reinigung des Kondensators von Verschmutzungen aufrechterhalten werden.

Zudem soll das Vorbehandlungsverfahren eine Konditionierung erlauben, die es erlaubt, auch im Zyklus der Reinwasser-Produktion eingesetzt zu werden und nicht ausschliesslich im alternierenden Spülzyklus, so dass durch das Vorbehandlungsverfahren und die Vorbehandlungseinrichtung keine zusätzliche Abwassermenge erzeugt wird.

Denkbar wären hier auch mindestens zwei parallel geschaltete Vorbehandlungsstufen, gegebenenfalls auch gemeinsam in einer Vorbehandlungs- Austauscheinheit oder Austauschkartusche integriert, die alternierend und/oder gleichzeitig die Reinigungs- und Spülzyklen der Durchflusskondensatorzelle speisen.

Alternierend könnten die parallel geschalteten Vorbehandlungsstufen über ein Speisewasser-Umschaltventil im Takt der Reinigungs- und Spülzyklen die Durchflusskondensatorzelle speisen. Eine gleichzeitige Speisung wäre zum Beispiel durch eine Aufteilung des primären Speisewasserstroms möglich, zum Beispiel mittels eines Proportional-Ventils, zweier getrennt ansteuerbarer Ventile wie Schalt- oder Steuerventile oder dergleichen. In einer weiter bevorzugten Ausführungsform kann auch ein Bypass zur Speisewasser-Vorbehandlungsstufe vorgesehen sein. Insbesondere vorteilhaft mit einem Steuerelement, zur Ermöglichung einer Einflussnahme auf das Verschnittverhältnis des mit dem durch die Aufbereitungsstufe aufbereitetem Speisewassers. Hierdurch kann einerseits eine genauere Einstellung der Speisewasservorbehandlung ermöglicht werden, zum Beispiel in Abhängigkeit von der lokalen Wasserqualität und/oder deren gegebenenfalls auftretenden Schwankungen. Andererseits kann durch eine Annäherung an eine maximal nötige Vorbehandlung andernfalls unnötig verbrauchtes Aufbereitungsmaterial gespart und dadurch die Laufzeit der betreffenden Vorstufe verlängert werden.

Auch eine Steuerung und/oder Regelung des Ventilzustandes bzw. dessen Durchlasseigenschaft für die Vorreinigungsstufe und/oder dem Bypass in Abhängigkeit eines Steuersignals für ein weiteres, im Auslauf des Durchlaufkondensators angeordnetes Ventil kann eine Effizienzverbesserung bewirken. Beispielsweise kann das weitere Ventil zwischen einem Reinwasserauslass und einem Spülwasserauslass angeordnet sein. Im Spülmodus kann dann zum Beispiel die Vorbehandlungsstufe deaktiviert und/oder zum Beispiel über den Bypass umgangen werden.

Beschreibung des Vorbehandlungsverfahrens und der Vorbehandlungseinrichtung:
Ziel der Erfindung soll es sein, durch ein an die Anwendung und/oder ggf. an das Speisewasser angepasstes Vorbehandlungsverfahren des Speisewassers, ggf. auch in Kombination mit einer an die Anwendung oder Maschine und/oder an das Speisewasser angepassten Programmierung der Steuerung der alternierenden Produktions- und Spülzyklen eines Durchflusskondensators, eine vorzeitige Belegung und Verstopfung des Durchflusskondensators zu vermeiden und eine an die Anwendung angepasste Betriebsweise der Reinigungsvorrichtung ohne zwischenzeitliche Unterbrechung zur Reinigung des Kondensators von Verschmutzungen, aufrecht zu erhalten.

Ein geeignetes Vorbehandlungsverfahren und/oder eine Vorbehandlungseinrichtung soll insbesondere einen sicheren und zuverlässigen Einsatz der Durchflusskondensator- Technik zur Speisung von Maschinen über einen langen Zeitraum sicherstellen, ohne dass der Betrieb der Maschinen wegen der Reinigung des Durchflusskondensators unterbrochen oder eingeschränkt werden muss oder häufige oder aufwendige Wartungsmassnahmen erforderlich werden.

Anwendungsmöglichkeiten des Durchflusskondensators in Kombination mit Maschinen:
Der Einsatz von Durchflusskondensatoren zur Aufbereitung von Wasser für die Speisung von Maschinen und Geräten, insbesondere von Heisswasser- und Dampferzeugern bietet Vorteile, da der Mineral- und insbesondere der Härtegehalt im Speisewasser durch den Kondensator soweit reduziert werden kann, dass Ablagerungen und Verstopfungen in den Maschinen vermieden oder soweit reduziert werden können, dass aufwändige Reinigungs- oder Entkalkungsschritte nicht mehr notwendig sind oder deutlich seltener durchgeführt werden müssen. Bei Speisung von Systemen mit Heizelementen kann zudem Energie eingespart werden, wenn Ablagerungen auf den Heizelementen vermieden oder reduziert werden.
Insbesondere in Kombination mit Haushalts- oder professionellen Küchengeräten, wie z. B. Kaffee- und Espressomaschinen, Spül- oder Waschmaschinen, Kühl- und Gefrierschränken mit Eiswürfel- und Trinkwasserbereitung, Dampfbügelstationen, Dampföfen oder Dampfgarern, Getränkeautomaten, Wäschemangeln, etc., bietet die Durchflusskondensator- Technik zahlreiche Vorteile gegenüber alternativen Wasseraufbereitungstechnologien.
Die Kondensatoren können aufgrund ihrer reduzierten Raumbedarfs auch in Maschinen integriert werden und bedürfen somit keiner zusätzlichen Stellfläche, wie z.B. bei Einsatz grosser Ionentauscher- Patronen notwendig. Zudem kann bei Integration der Durchflusskondensator-Technik in das Gehäuse einer Maschine durch Verknüpfung der elektrischen Komponenten zur Steuerung und zum Betrieb des Durchflusskondensators und der Maschine Kosten gespart und eine gemeinsame Bedienung beider Komponenten über das Bedienfeld der Maschine bewerkstelligt werden.

Bei einer in eine Austauscheinheit integrierten Vorbehandlungs-Durchflusskondensatorzellen-Kombination lassen sich die Maschinen- Integration auf die elektrischen und hydraulischen Steuerungselemente reduzieren. Durch diese Reduzierung könnten Einbauraum und Kosten eingespart werden und der einfache Austausch der Wechseleinheit an einer leicht zugänglichen Position an oder bei der Maschine ermöglicht werden.
Die Integration der Durchflusskondensatorzelle in eine kostengünstige Austauscheinheit ermöglicht insbesondere bei langjährig betriebenen Maschinen erst die Integration der Durchflusskondensator-Technik in die Maschine oder fördert sie, da für den Austausch der Durchflusskondensatorzelle nicht in den Bauraum der Maschine eingegriffen werden muss und kein speziell ausgebildeter Servicetechniker für den Austausch erforderlich ist.

Bei Einsatz der Durchflusskondensator-Technik zum Ersatz oder zur Ergänzung integrierter oder vorgeschalteter Kationenaustauscher-Enthärter für Spülmaschinen oder Waschmaschinen, kann die notwendige Salzmenge zur Regenerierung der Enthärterstufe reduziert oder sogar gänzlich eingespart werden.
Ähnlich vorteilhaft kann die Durchflusskondensator-Technik zum Ersatz oder zur Vorbehandlung von integrierten oder den Spül- oder Waschmaschinen vorgeschalteten Teilentsalzungssystemen, z. B. auf Basis schwachsaurer Kationenaustauscher, dienen und die notwendige Menge an Säure zur Regenerierung des Teilentsalzungssystems reduzieren oder sogar gänzlich einsparen oder bei Einsatz von Wechsel-Ionentauscherpatronen zur direkten Speisung von Spül- oder Waschmaschinen der Austauschzyklus der Patronen reduziert oder der Einsatz der Patronen gänzlich vermieden werden.
Auch denkbar wäre die Nutzung der aufkonzentrierten Ionen aus dem Spülzyklus der Durchflusskondensatorzelle zur Regenerierung oder Vorkonditionierung vorgeschalteter Ionenaustauscherstufen.

Auch beim Einsatz in Verbindung mit Trinkwasserspendern oder Getränkebereitungsmaschinen, wie z. B. Kaffee- oder Espressomaschinen, kann die Durchflusskondensator-Technik Vorteile bieten, da der Gesamtmineralgehalt des Speisewassers nur soweit reduziert werden kann, dass die Geräte ausreichend vor Härteausfällungen und Verschmutzungen geschützt werden können, aber gleichzeitig ein ausreichender Mineraliengehalt im Wasser erhalten bleibt, um eine gute geschmackliche Qualität des Getränks oder des Wassers sicher zu stellen.

Hierbei bietet der Durchflusskondensator auch die Möglichkeit Geschmacks- und Geruchsstoffe, wie z. B. Chlor oder Huminsäuren, aus dem Speisewasser zu entfernen und ein geschmacks- und geruchsneutrales Trinkwasser ohne Nachschaltung von Aktivkohlefiltern bereit zu stellen.

Darüber hinaus kann das Speisewasser durch die Durchflusskondensator-Technik soweit aufgereinigt werden, dass Schadstoffe, wie z. B. Nitrat, Schwermetalle, Pestizide oder andere Verunreinigungen, soweit reduziert werden, dass sich das Wasser zum menschlichen Verzehr eignet. Dank des elektrischen Feldes innerhalb eines Durchflusskondensators lässt sich auch ein Aufwachsen von Mikroorganismen unterdrücken und die Entfernung oder Abtötung von im Speisewasser befindlichen Mikroorganismen bewirken. Hierbei eignet sich die Technik somit auch als "kaltes" Desinfektionsverfahren zur Herstellung von mikrobiologisch unbedenklichem Trinkwasser, z. B. bei direkt mit dem Wasserleitungsnetz gespeisten Eiswürfelbereitern, Kühlschränken mit Eis- und Wasserspendern oder in Verbindung mit sog. Wasser-Coolern oder Vendingmaschinen.

Ein weiterer vorteilhafter Einsatzbereich von Durchflusskondensatoren mit Maschinen bietet sich beim Einsatz von Speisewässern mit hohem Chlorid-Anteil; insbesondere bei Brackwasser, in küstennahen Regionen mit hohem Oberflächenwasseranteil, etc., wo hohe Chlorid-Gehalte zu übermässiger Korrosion von Maschinen und insbesondere von Küchenmaschinen, wie Dampfkochgeräten, Kaffee- und Espressomaschinen, etc. führen können und der Einsatz von schwachsauren Kationenaustauschern oder Enthärtern für die Aufbereitung des Wassers keine Lösung darstellt.

Neben dem mit Maschinen kombinierten oder integrierten Einsatz der Durchflusskondensatoren bietet sich die Technik auch zum Ersatz oder der Ergänzung von zentralen Enthärteranlagen auf Basis der Kationenaustauschertechnik, z. B. in Gebäuden, in Grossküchen, etc. an, da durch den Einsatz des Durchflusskondensators die zur Regeneration des Kationenaustauschers erforderliche Salzmenge erheblich reduzieren oder sogar ganz einsparen lässt.

Eine weitere vorteilhafte Anwendung des Durchflusskondensators ist z. B. die Speisung von wasserabhängigen Laborgeräten oder medizinischen Behandlungsgeräten oder von Vollentsalzungsstufen auf Basis von Ionenaustauschern oder Elektroentionisierungsgeräten (EDI) oder von Reinstwasseranlagen für den klinischen oder wissenschaftlichen Anwendungsbereich, wie z. B. für die Speisung von Blutanalysegeräten oder für den Einsatz in chemisch-, biologischen Laboratorien, z. B. zur Herstellung von Zellkulturmedien, oder für den Ansatz von Lösungen im Bereich der apparativen Analytik oder zur Speisung von Reinigungs- und Desinfektionsgeräten, Autoklaven, Dentalequipment, etc. in Kliniken und Arztpraxen.

Insbesondere aufgrund der hohen Volumenleistung der Durchflusskondensatoren pro Produktionszyklus bei relativ kompakten Baumassen, sowie aufgrund des Vorteils keine Prozessdrücke, wie bei einer Umkehrosmose, für die Wasserreinigung und damit auch üblicherweise keine Druckerhöhungspumpe zu erfordern, lässt sich der Durchflusskondensator ideal in eine Labor-Reinstwasseranlage integrieren.

Insbesondere aufgrund den üblicherweise geringen und nur sporadisch erforderlichen Wasserentnahme-Mengen eines Laboratoriums eignet sich ein Durchflusskondensator ideal zur direkten Speisung von Reinigungs- und Desinfektionsgeräten, Sterilisatoren, Spülmaschinen, etc. oder z. B einer nachgeschalteten Reinigungsstufe, z. B. in einer Labor-Reinstwasseranlage, so dass üblicherweise auch kein Zwischenlagertank erforderlich wird, in dem sich die Wasserqualität aufgrund der Lagerung wieder verschlechtern kann.

### Ausführungsbeispiel:

Mögliche Ausführungsformen werden nachfolgend unter Bezugnahme auf die beiden Figuren näher beschrieben. Es zeigen:
- Figur 1: rein beispielhaft und schematisch eine erste Ausführungsform einer Vorrichtung zur Aufbereitung von Speisewasser und
- Figur 2: wiederum rein schematisch und beispielhaft eine dem gegenüber abgewandelte, weitere Ausführungsform.

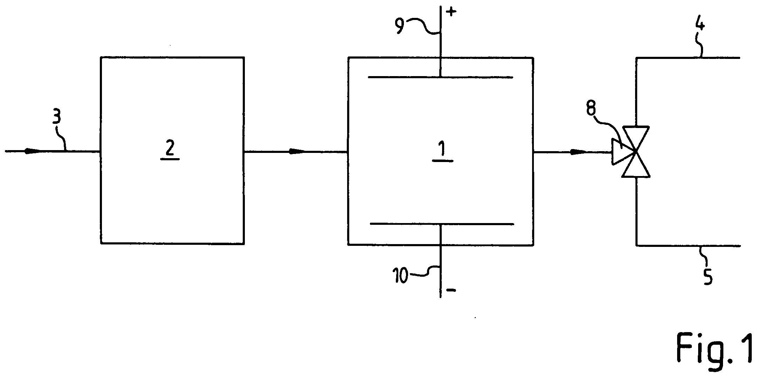

Dementsprechend umfasst die Vorrichtung zur Aufbereitung von Speisewasser nach der Figur 1 einen Durchflusskondensator 1, dem erfindungsgemäß eine Speisewasser-Vorbehandlungseinheit 2 in Zulaufrichtung des Speisewassers 3 vorgeschaltet ist.

Mittels der Speisewasser-Vorbehandlungseinheit 2 kann erfindungsgemäß das dem Durchflusskondensator zur Aufbereitung zugeführte Speisewasser so weit vorbehandelt werden, dass im Durchflusskondensator nur eine vergleichsweise langsame, bzw. stark verzögerte, im Idealfall sogar überhaupt keine sich darin festsetzenden Ablagerungen gebildet werden.

Andernfalls erforderliche, sehr aufwendige Grundreinigungen des Durchflusskondensators können hierdurch zumindest drastisch reduziert werden und im besten Fall in die Wartungsfreundlichkeit noch weiter erhöhender Weise sich sogar völlig erübrigen.

Der Durchflusskondensator 1 ist zur Aufbereitung des ihn durchfließenden Speisewassers mit einer Anode 9 und einer Katode 10 ausgestattet. Ausgangsseitig kann zur Erhöhung des Automatisierungsgrades der Vorrichtung zur Aufbereitung des Speisewassers ein Ventil 8 in den Strömungsfluss integriert sein, um beispielsweise den Reinwasserauslass 5 sperren zu können, zum Beispiel während eines Reinigungsvorgangs. Für diesen Betriebsfall kann das aus dem Durchflusskondensator austretende Spülwasser über den durch die Abwasserleitung 4 zur Entsorgung des Spülwasser-Konzentrats vorgesehenen Strömungspfad abgeführt werden.

Um Verluste durch Austritt von gereinigtem Speisewasser durch die Abwasserleitung 4 zu vermeiden, kann auch in der Abwasserleitung 4 ein entsprechendes Ventil angeordnet sein. In besonders vorteilhafter Weise kann es sich hierbei um das gleiche Ventil 8 handeln, welches auch zur Steuerung und/oder Regelung der Reinwasserleitung 5 vorgesehen sein kann. Beispielsweise geeignet hierfür wäre ein Umschaltventil, welches für den jeweiligen Betriebsmodus -Reinwasserabgabe bzw. Spülmodus- die jeweilige Leitung 4, 5 frei schaltet bzw. die andere sperrt.

Die zum Durchflusskondensator eingangsseitig angeordnete Speisewasser-Vorbehandlungseinheit 2 kann je nach Anforderung an die zu erzielende Vorbehandlung des dem Durchflusskondensator zuzuführenden Speisewassers und/oder dessen Güte- bzw. Qualität verschiedenste Aufbereitungs- und/oder Reinigungsmittel enthalten. Diese können einzeln und/oder in Kombination in einem entsprechenden Reinigungsmittel-Aufnahmeraum, z. B. einer Kammer, deponiert und/oder angeordnet sein.

Neben Einkammersystemen sind beispielsweise auch Mehrkammersysteme zur Aufnahme verschiedener, gegebenenfalls in bestimmter Reihenfolge hintereinander in Strömungsrichtung anzuordnender Reinigungsmittel möglich. Eine Trennung einzelner Kammern und/oder darin angeordneter Reinigungsmittel kann beispielsweise durch Trennwände, Rückhaltemittel wie zum Beispiel Siebe, Fliese und/oder zumindest partikelflusshindernde Zwischenfilter und/oder durch eine entsprechend mechanische Festigkeit wenigstens eines Aufbereitungs- bzw. Reinigungsmittels, beispielsweise in der Form eines porösen Filterelementes, ausgebildet sein.

Als Wasseraufbereitungsmittel für sie Speisewasser-Vorbehandlungseinheit kann beispielsweise eine Kationentauscher-Stufe vorgesehen sein, beispielsweise auch in der Form einer schwach sauren und/oder einer wasserstoffgebundenen. Denkbar .ist auch der Einsatz eines pH-Wert-Verschiebers, einer Härtestabilisierungs-Stufe, einer Kristallisationshemmer-Stufe, einer Phosphat-Verbindung oder dergleichen mehr.

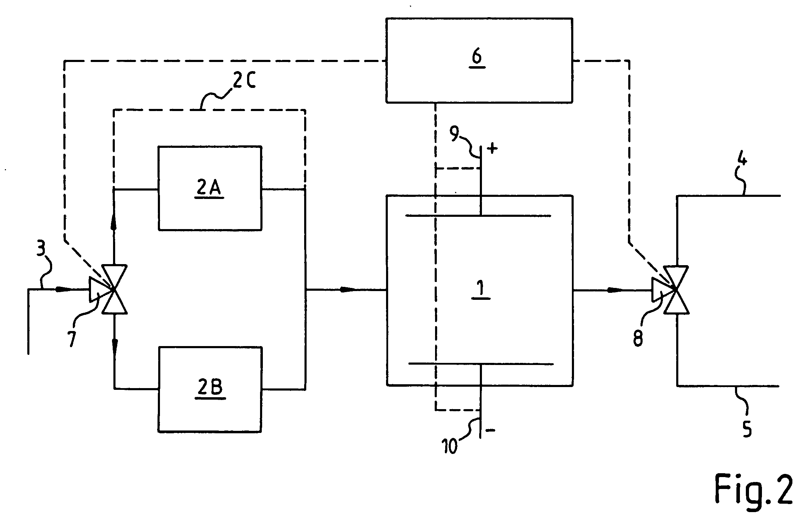

In weiter bevorzugter Weise kann, entsprechend der in der Figur 2 beispielhaft und schematisch dargestellten Ausführungsform, die Vorbehandlungsstufe 2 durch zwei parallel geschaltete Vorbehandlungsstufen 2A, 2B ausgebildet sein.

Hierdurch kann beispielsweise eine bessere Anpassung der Aufbereitung des Speisewassers durch die Vorbehandlungseinheit, oder auch Vorbehandlungsstufe genannt, an Anwendungsfälle mit unterschiedlichen Qualitäten des aufzubereitenden Speisewassers bewirkt werden. Beispielsweise können in den beiden Vorbehandlungseinheiten 2A bzw. 2B unterschiedliche Speisewasser-Aufbereitungsmittel in den den Durchflusskondensator 1 speisenden Speisewasserstrom eingebracht werden.

Je nach Bedarf kann hierbei auch ein Verschnitt des so durch die beiden parallel im Strömungsfluss angeordneten Vorbereitungseinheiten 2A, 2B Stromteile generiert werden, die grundsätzlich eine vollständige Ausfilterung bestimmter Speisewasser-Inhaltsstoffe, wie beispielsweise Mineralien oder dergleichen, dadurch verhindern, dass im zur jeweiligen Filterung komplementären Streckenabschnitt kein entsprechendes, diesbezügliches Filtermittel vorgesehen ist.

Dem gegenüber kann in weiter vorteilhafter Weise in beiden Filtern 2A, 2B jeweils ein Filtermittel vorgesehen sein, welches zwingend auszufilternde, gegebenenfalls im Wasser vorkommende Stoffe, wie zum Beispiel Schwermetalle, Chlor oder dergleichen in jedem Zulaufstrom für den Durchflusskondensator herausfiltert.

In einer ersten Ausführungsform kann ein Verschnitt zwischen den beiden Vorbehandlungseinheiten 2A, 2B beispielsweise über die Widerstände der beiden Fließstrecken zueinander vorgegeben werden. Die Widerstände können hierbei abhängen vom Querschnitt der Leitungen, von der Durchlässigkeit der betreffenden Filtermittel und dergleichen mehr.

Durch das Vorsehen eines Ventils 7 in wenigstens einer der Zuleitungen der beiden Vorbehandlungseinheiten 2A, 23 ist im Hinblick auf einen höheren Automatisierungsgrad ein gezielterer Eingriff in den Strömungsfluss durch die Vorbehandlungseinheit 2 möglich.

Sofern in den Zuleitungen beider Vorbehandlungseinheiten 2A, 2B jeweils ein Ventil vorgesehen ist, kann auf beide Strömungspfade direkt durch die Ansteuerung des betreffenden Ventils ein noch höherer Automatisierungsgrad erzielt werden. Besonders vorteilhaft kann hierbei ein Ventil 7 zur Anwendung kommen, mit welchem sowohl der Strömungspfad durch die Vorbehandlungseinheit 2A als auch der durch die Vorbehandlungseinheit 2B kontrolliert werden kann.

In einer ersten Ausführungsform kann das Ventil 7 hierbei als Umschaltventil ausgebildet sein, so dass jeweils nur ein Strömungspfad durchgeschaltet ist. Bei der Verwendung eines Ventils, welche beide Pfade gleichzeitig versorgen kann, insbesondere bevorzugt mit einem einstellbaren Durchflussverhältnis der beiden Strömungspfade 2A, 2B zueinander, kann im Weiteren eine Einstellmöglichkeit des oben bereits erwähnten Schnittverhältnisses zwischen den beiden Strömungspfaden ermöglicht werden.

Eine andere Betriebsmöglichkeit zweiter solcher parallel geschalteter Vorbehandlungseinheiten 2A, 2B wäre die wahlweise Aktivierung des einen bzw. des anderen, bei gleichzeitiger Deaktivierung des jeweiligen komplementären Strömungspfades. Hierdurch könnte entweder ein Vorsorgesystem geschaffen werden, bei welchem sichergestellt werden kann, dass immer eine Speiswasser-Vorbehandlungseinheit eine ausreichende Vorbehandlung des dem Durchflusskondensators zuzuführenden Speisewasserstroms sicherstellt, während für die beispielsweise zwischenzeitlich erschöpfte, parallele Vorbehandlungseinheit Ersatz beschafft werden kann.

Ein dem gegenüber weiterer Anwendungsfall kann beispielsweise dadurch realisiert werden, dass durch eine der beiden Vorbehandlungseinheiten 2A, 2B eine Vorbehandlung des dem Durchlaufkondensators 1 zuzuführenden Speisewasserstroms für die Reinwasseraufbereitung vorgesehen ist. Die komplementäre Vorbehandlungseinheit kann dem gegenüber beispielsweise mit Aufbereitungs- bzw. Reinigungsmitteln versehen sein, die während eines Spül- bzw. Reinigungszyklusses des Durchflusskondensators diesem zu dessen Reinigung zugeführt werden kann.

Mittels eines in gestrichelter Linie beispielhaft dargestellten Bypasses 2C kann eine weitere Einflussmöglichkeit auf die Reinigungsintensität der Vorbehandlungseinheit 2 und/oder deren Erschöpfungsgeschwindigkeit Einfluss genommen werden. Zur Steuerung des durch den Bypass 2C fließenden Stroms von Speisewasser können grundsätzlich alle oben bereits zur Steuerung des Strömungsverhältnisses zwischen den beiden Strömungspfaden 2A und 2B beschriebenen Mittel in entsprechender Weise Anwendung finden. Weiterhin ist es auch möglich, dass das Ventil 7 so ausgebildet ist, dass es drei Ausgänge 2A bis 2C kontrollieren kann, besonders vorteilhaft mit variablen Verschnittverhältnissen zwischen den einzelnen Strömungspfaden.

Als Betriebsarten können sowohl ein kontinuierlicher Betrieb wenigstens eines der drei Strömungspfade vorgesehen sein, als auch gegebenenfalls ein alternierender, wobei für diesen ein Zu- bzw. Abschalten wahlweise zu einem kontinuierlichen und/oder ebenfalls alternierenden Betrieb wenigstens eines der beiden übrigen Strömungspfade vorteilhaft sein kann. Dies gilt auch für die Ausführungsform, in der lediglich zwei parallel angeordnete Vorbehandlungseinheiten 2A, 2B vorgesehen sind.

Die Steuerung des im Zulaufpfades des Speisewasser angeordneten Ventils 7, sofern mehrere vorhanden sind, kann es auch alle betreffen, kann in weiter vorteilhafter Weise abhängig von einem Steuersignal eines im Reinwasserauslass 5 und/oder in der Abwasserleitung 4 angeordneten Ventils 8 erfolgen.

Je nach Aufbau der Vorrichtung zur Aufbereitung des Speisewassers und/oder möglichen Betriebsmodi kann wenigstens eine Speisewasser-Vorbehandlungseinheit 2 zur Vorbehandlung des durch den Durchflusskondensators weiter aufzubereitenden Speisewassers aktiviert bzw. deaktiviert werden. Gleiches gilt für den Reinigungs- bzw. Regenerationsmodus für den Durchflusskondensator 1. Falls erforderlich, können durch entsprechende Aktivierung des betreffenden Ventils 7 Reinigungsmittel in den Durchflusskondensator 1 eingeleitet und dieser hierdurch gereinigt werden. Auch eine anschließende Spülung allein durch die Versorgung über den Bypass 2C ist grundsätzlich denkbar, beispielsweise zur weiteren Effizienzsteigerung der betreffenden Speisewasser-Vorbehandlungseinheit, die den Durchflusskondensator zur Aufbereitung von Reinwasser vorgeschaltet ist.

Aber auch die Zufuhr von durch Speisewasser-Vorbehandlungseinheit 2 aufbereitetem Speisewasser während des Spülzyklusses kann Vorteile bringen. Beispielsweise dahingehend, dass sich bei gegebenenfalls stark verkalktem Wasser nicht bereits während des Spülzyklusses wieder erste Ablagerungen im Durchflusskondensator bilden können.

Zur Steuerung der Ventile 7, 8 und gegebenenfalls auch zur Versorgung der Anode 9 und der Kathode 10 des Durchflusskondensators 1 kann in weiter vorteilhafter Weise eine Kontrolleinheit 6 vorgesehen sein.

Die Vorbehandlungseinheit 2 ist als eine in einen leitungsgebundenen Anschlusskopf einsetzbare Filter-Austauschkartusche ausgebildet. Auch ist die Vorbehandlungseinheit 2 mit einer Durchflusskondensatorzelle 1 in einer Filter-Wechselkartusche kombiniert. Hierbei ist die Durchflusskondensatorzelle selbst als Austauschelement für eine Wechselfilterkartusche ausgebildet. So ist lediglich die Vorbehandlungseinheit 2 zu ersetzen, die Durchflusskondensatorzelle 1 kann anschließend daran in die neue Filter-Wechselkartusche eingesetzt werden und das Speisewasser weiter aufbereiten. Der Übersichtlichkeit halber wurde diese Kombination und Integration jedoch nicht in den Figuren 1 und 2 dargestellt.

### Bezugszeichenliste:

- 1: Durchflusskondensator
- 2: Speisewasser-Vorbehandlungseinheit;
2A: 1. Vorbehandlungsstufe
2B: 2.Vorbehandlungsstufe
2C: Bypass
- 3: Speisewasser
- 4: Spülwasser-Konzentrat (Abwasser)
- 5: Reinwasser-Diluat
- 6: PC Board (Steuereinheit)
- 7: 1. Ventil (Speisewasser-Umschalt-Ventil)
- 8: 2. Ventil (Reinwasser/Abwasser-Ventil)
- 9: Anode
- 10: Kathode

## Patentansprüche

1. Vorrichtung zur Aufbereitung von Speisewasser für die Speisung eines Durchflusskondensators (1), wobei dem Durchflusskondensator (1) eine Speisewasser-Vorbehandlungseinheit (2) in Wasserzulaufrichtung vorgeschaltet ist, **dadurch gekennzeichnet, dass** die Vorbehandlungseinheit in Kombination mit dem Durchflusskondensator in einer als Austauschelement zum Anschluss an einen leitungsgebundenen Anschlusskopf ausgebildeten Filterwechselkartusche integriert ist, wobei der Durchflusskondensator als Austauschelement in der Filterwechselkartusche ausgebildet ist.

2. Vorrichtung nach Anspruch 1, **dadurch gekennzeichnet, dass** wenigstens zwei parallel geschaltete Vorbehandlungsstufen (2A, 2B) für die Speisewasser-Vorbehandlungseinheit (2) vorgesehen sind.

3. Vorrichtung nach Anspruch 1 oder 2, **dadurch gekennzeichnet, dass** ein Bypass (2C) zur Speisewasser-Vorbehandlungseinheit (2) vorgesehen ist.

4. Vorrichtung nach Anspruch 3, **dadurch gekennzeichnet, dass** ein erstes Ventil (7) zur Steuerung des durch die Speisewasser-Vorbehandlungseinheit (2) und/oder durch den Bypass (2C) fließenden Speisewassers vorgesehen ist.

5. Vorrichtung nach einem der vorangehenden Ansprüche, **dadurch gekennzeichnet, dass** die Speisewasser-Vorbehandlungseinheit (2) für einen alternierender Betrieb zur Konditionierung des Speisewassers zur Vermeidung oder Reduzierung von Ablagerungen und Verstopfungen im Durchflusskondensator und dessen Reinigung vorgesehen ist.

6. Vorrichtung nach einem der vorangehenden Ansprüche, **dadurch gekennzeichnet, dass** die Speisewasser-Vorbehandlungseinheit (2) für einen kontinuierlichen Betrieb vorgesehen ist.

7. Vorrichtung nach einem der vorangehenden Ansprüche 4 bis 6, **dadurch gekennzeichnet, dass** das erste Ventil (7) in Abhängigkeit eines Steuersignals für ein zweites Ventil (8) zur Steuerung des Wasserdurchflusses im Durchflusskondensator (1) zwischen einem Reinwasserauslass (5) und einem Spülwasserauslass (4) geschaltet ist.

8. Vorrichtung nach einem der vorangehenden Ansprüche, **dadurch gekennzeichnet, dass** die Speisewasser-Vorbehandlungseinheit (2) eine Kationenaustauscher-Stufe umfasst.

9. Vorrichtung nach einem der vorangehenden Ansprüche, **dadurch gekennzeichnet, dass** die Speisewasser-Vorbehandlungseinheit (2) eine wasserstoffgebundene Kationenaustauscher-Stufe umfasst.

10. Vorrichtung nach einem der vorangehenden Ansprüche, **dadurch gekennzeichnet, dass** die Speisewasser-Vorbehandlungseinheit (2) ein pH-Wert-Verschieber ist.

11. Vorrichtung nach einem der vorangehenden Ansprüche, **dadurch gekennzeichnet, dass** die Speisewasser-Vorbehandlungseinheit (2) eine Härtestabilisierungs-Stufe umfasst.

12. Vorrichtung nach einem der vorangehenden Ansprüche, **dadurch gekennzeichnet, dass** die Speisewasser-Vorbehandlungseinheit (2) eine Kristalisationshemmer-Stufe umfasst.

13. Vorrichtung nach einem der vorangehenden Ansprüche, **dadurch gekennzeichnet, dass** die Speisewasser-Vorbehandlungseinheit (2) eine Phosphatverbindung umfasst.

## Claims

1. A device for preparing feed water for feeding a flow-through capacitor (1), wherein a feed water pretreatment unit (2) is arranged upstream of the flow-through capacitor (1) in the water feed direction, **characterised in that** the pretreatment unit in combination with the flow-through capacitor is integrated in a filter change cartridge formed as a replacement element for connection to a pipe-bound connection head, wherein the through-flow capacitor is formed as a replacement element in the filter change cartridge.

2. The device according to claim 1, **characterised in that** at least two pretreatment stages (2A, 2B) connected in parallel are provided for the feed water pretreatment unit (2).

3. The device according to claim 1 or 2, **characterised in that** a bypass (2C) of the feed water pretreatment unit (2) is provided.

4. The device according to claim 3, **characterised in that** a first valve (7) for controlling the feed water flowing through the feed water pretreatment unit (2) and/or through the bypass (2C) is provided.

5. The device according to any one of the preceding claims, **characterised in that** the feed water pretreatment unit (2) is provided for alternating operation for conditioning the feed water in order to avoid or reduce deposits and blockages in the flow-through capacitor and cleaning thereof.

6. The device according to any one of the preceding claims, **characterised in that** the feed water pretreatment unit (2) is provided for continuous operation.

7. The device according to any one of preceding claims 4 to 6, **characterised in that** the first valve (7) is switched between a clean water outlet (5) and a rinse water outlet (4) depending on a control signal for a second valve (8) for controlling the water flow in the flow-through capacitor (1).

8. The device according to any one of the preceding claims, **characterised in that** the feed water pretreatment unit (2) comprises a cation exchanger stage.

9. The device according to any one of the preceding claims, **characterised in that** the feed water pretreatment unit (2) comprises a hydrogen-bonded cation exchanger stage.

10. The device according to any one of the preceding claims, **characterised in that** the feed water pretreatment unit (2) is a pH value shifter.

11. The device according to any one of the preceding claims, **characterised in that** the feed water pretreatment unit (2) comprises a hardness stabilisation stage.

12. The device according to any one of the preceding claims, **characterised in that** the feed water pretreatment unit (2) comprises a crystallisation inhibitor stage.

13. The device according to any one of the preceding claims, **characterised in that** the feed water pretreatment unit (2) comprises a phosphate compound.

## Revendications

1. Dispositif destiné à la préparation d'eau pour l'alimentation d'un condensateur à écoulement traversant (1), une unité de pré-traitement d'eau d'alimentation (2) étant montée en amont du condensateur à écoulement traversant (1) dans la direction d'écoulement de l'eau, **caractérisé en ce que** l'unité de pré-traitement en combinaison avec le condensateur à écoulement traversant est intégrée dans une cartouche filtrante remplaçable conçue sous la forme d'un élément de remplacement à raccorder à une tête de raccord reliée à la conduite, le condensateur à écoulement traversant étant conçu sous la forme d'un élément de remplacement dans la cartouche filtrante remplaçable.

2. Dispositif selon la revendication 1, **caractérisé en ce qu'**au moins deux étapes de pré-traitement montées en parallèle (2A, 2B) sont prévues pour l'unité de pré-traitement d'eau d'alimentation (2).

3. Dispositif selon la revendication 1 ou 2, **caractérisé en ce qu'**une dérivation (2C) est prévue vers l'unité de pré-traitement d'eau d'alimentation (2).

4. Dispositif selon la revendication 3, **caractérisé en ce qu'**il est prévu une première vanne (7) destinée à réguler l'eau d'alimentation s'écoulant par l'unité de pré-traitement d'eau d'alimentation (2) et/ou par la dérivation (2C).

5. Dispositif selon l'une quelconque des revendications précédentes, **caractérisé en ce que** l'unité de pré-traitement d'eau d'alimentation (2) est prévue pour un fonctionnement alterné destiné au conditionnement de l'eau d'alimentation pour éviter ou réduire les dépôts et les colmatages dans le condensateur à écoulement traversant et pour son nettoyage.

6. Dispositif selon l'une quelconque des revendications précédentes, **caractérisé en ce que** l'unité de pré-traitement d'eau d'alimentation (2) est prévue pour un fonctionnement en continu.

7. Dispositif selon l'une quelconque des revendications précédentes 4 à 6, **caractérisé en ce qu'**en fonction d'un signal de commande pour une seconde vanne (8) destinée à réguler l'écoulement d'eau dans le condensateur à écoulement traversant (1), la première vanne (7) est montée entre un orifice d'évacuation d'eau claire (5) et un orifice d'évacuation d'eau de rinçage (4).

8. Dispositif selon l'une quelconque des revendications précédentes, **caractérisé en ce que** l'unité de pré-traitement d'eau d'alimentation (2) comprend une étape d'échange de cations.

9. Dispositif selon l'une quelconque des revendications précédentes, **caractérisé en ce que** l'unité de pré-traitement d'eau d'alimentation (2) comprend une étape d'échange de cations liés par des liaisons hydrogène.

10. Dispositif selon l'une quelconque des revendications précédentes, **caractérisé en ce que** l'unité de pré-traitement d'eau d'alimentation (2) est un variateur du pH.

11. Dispositif selon l'une quelconque des revendications précédentes, **caractérisé en ce que** l'unité de pré-traitement d'eau d'alimentation (2) comprend une étape de stabilisation de dureté.

12. Dispositif selon l'une quelconque des revendications précédentes, **caractérisé en ce que** l'unité de pré-traitement d'eau d'alimentation (2) comprend une étape d'inhibition de la cristallisation.

13. Dispositif selon l'une quelconque des revendications précédentes, **caractérisé en ce que** l'unité de pré-traitement d'eau d'alimentation (2) comprend un composé phosphate.
